# EUROPEAN PATENT SPECIFICATION

(11) **EP 0 386 163 B1**
(45) Date of publication and mention of the grant of the patent: **15.09.1993**
(21) Application number: 89904271.7
(22) Date of filing: 20.03.1989
(51) Int. Cl.: C02F 3/02

(54) **PROCESS FOR SEPARATION**
TRENNVERFAHREN
PROCEDE DE SEPARATION

(30) Priority: 22.03.1988 SE 8801051
(43) Date of publication of application: 12.09.1990
(73) Proprietor: K.Z. HANDELS AKTIEBOLAG, S-434 01 Kungsbacka (SE)
(72) Inventor: HELGESSON, Ivan, S-448 00 Floda (SE)
(74) Representative: Inger, Lars Ulf Bosson
(86) International application number: SE8900149
(87) International publication number: WO8909193

(56) References cited:
- EP-A- 0 139 572
- DE-A- 2 641 718
- DE-A- 3 206 527
- DE-A-32 123 98
- DE-B- 2 017 671
- SE-B-43 015 3
- US-A- 357 986

## Description

The present invention relates to a device for carrying out a method at a biological purification step of waste water in aerated basins comprising static stirring in a non-aeration zone.

The object of the present invention is to obtain a possibility to increase the amount of biological sludge from a so called biostep in a plant for the purification of waste water and to lower the amount of COD (oxygen demanding) compounds in the water (sludge water) which is led on in the purification process and/or to a recipient. Hereby it is meant to increase and improve the formation of flocs in the precipitation step, and this can thus not only be applied on a biological purification step but can be used after a chemical precipitation step as well.

### Background of the invention

At so called biological purification in a plant for the treatment of waste water the water is introduced, after a coarse filtration, into large aeration basins through which the water is allowed to pass during a simultaneous, violent aeration by means of air introduced via nozzles in the bottom of the basins before the water (sludge water) is led to a sedimentation basin for precipitation of what is called, in a daily language, the biological sludge. The water from the sedimentation basin is then led further on to process steps for chemical precipitation and/or direct to a recipient.

Outgoing water from the precipitation basin contains, however, too large amounts of suspended material and particularly at heavy loaded plants, the outgoing water will also contain large amounts of oxygen consuming material. The more pollutants which are brought forward to the chemical precipitation step the more chemicals are needed to reduce the amounts of pollutants to an acceptable level. However, there is a desire to reduce to amount of chemicals which are used in a waste water purification plant for several reasons, partly economical, as the chemicals is a great cost in the running of the plant, partly for the risk of dissolving undesired side products, or at very acidic waters, release of dissociated aluminium or iron, which ions can damage biological life. Normally such a risk will not appear but the metal salts used will be precipitated with the so called chemical sludge.

DE-A-3,206,527 discloses a process and an apparatus for the biological treatment of waste water with an aeration tank, a non-aeration step with vertical stirring upstream of the precipitation step in a further tank. The non-aeration zone may be a separate zone or a zone at the end of the aeration tank.

DE-A-2,641,718 discloses a process and an apparatus in which waste water is treated in an aeration basin and is then introduced into a precipitation tank or settler by way of a device in the form of a tube located at the upper end of the tank into which device the waste water is introduced from the side.

Thus one desires an increased sedimentation effect in the biological step and thereby a reduced outgoing amount of suspended material to the chemical precipitation step.

### Description of the present invention

It has now surprisingly been found possible to be able to reduce the amount of outgoing suspended material by means of the present invention, which is characterized in that it comprises two, substantially concentric cylinders provided with a common bottom and further provided with an inlet opening in the outer cylinder and arranged in the upper part of this cylinder, as well as an inlet opening arranged in the inner cylinder and arranged in the lower part of this cylinder, and that the cylinders are provided with a spill-way and an outlet opening arranged centrally in its bottom.

Further characteristics are evident from the accompanying claims.

By applying the present invention it is obtained that the amount of suspended material in water from a subsequent precipitation step will be reduced with up to 70%. The amount of oxygen consuming material, particularly in heavy loaded plants, have also been able to be reduced with up to 50%.

The invention will be described more in detail below with reference to the accompanying drawings, wherein
- FIG. 1: shows schematically a plant used in biological purification of waste water, and
- FIG. 2: shows an insert device for obtaining a static and mechanical stirring
- FIG. 3: shows an embodiment of an insert device according to the present invention to obtain a static stirring
1 denotes generally a series of aeration basins in the biological step of a waste water purification plant. The basins have a length of about 10 m and a width of about 3 m in a normal sized plant, but can also be considerably larger at large plants. At the bottom 2 of the basins nozzles 3 are arranged for the introduction of large amounts of air in order obtain an aerobic degradation of the biological/organic material present in the sludge water. Normally several aeration basins are connected in series so that the water is brought further on either via a spillway or via a bottom channel. Normally the water is led from the last basin via a spillway to a precipitation basin 4 provided with a sludge hopper 5 and a chain or wire transported sludge scraper 6 before the water is led out via a drainage 7.

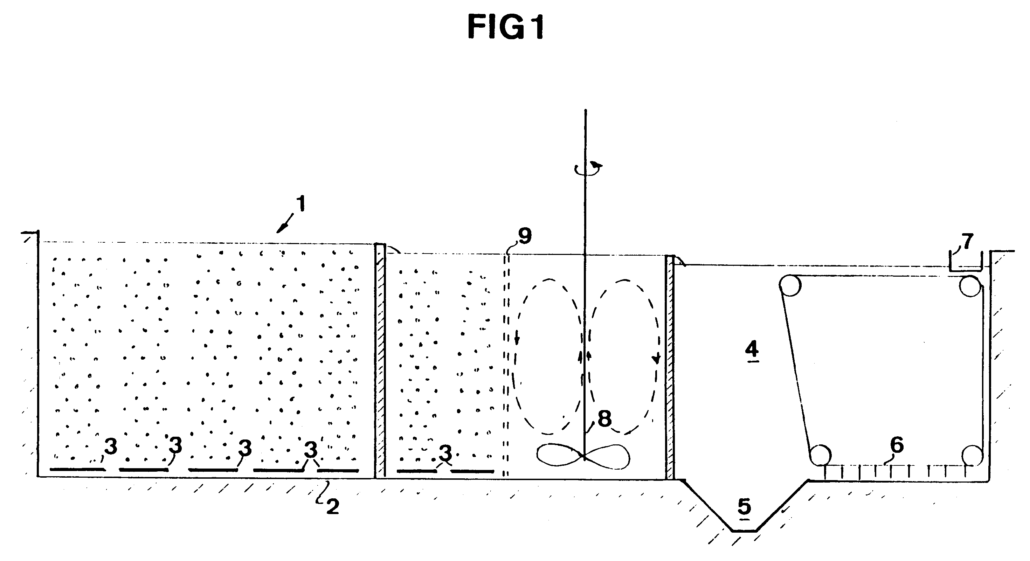

In the embodiment shown in FIG. 1, which is outside the scope of the present invention, the last nozzles 3 in the basin immediately prior to the precipitation basin have been eliminated or, more simply just been closed off, and in stead, there has been introduced a stirrer 8 which gives a mechanical stirring of the water in a zone after the aeration and without the addition of air.

This stirring has turned out to be enough to give an acceptable formation of flocs which give a reduction of suspended material after the precipitation.

In the most simple case no mechanical separation of or differentiation of the aeration and stirring zones is needed. If so desired a wooden wall 9 can easily be placed across the basin which wall has sparsely placed boards which allow passage of water from the aeration zone to the stirring zone.

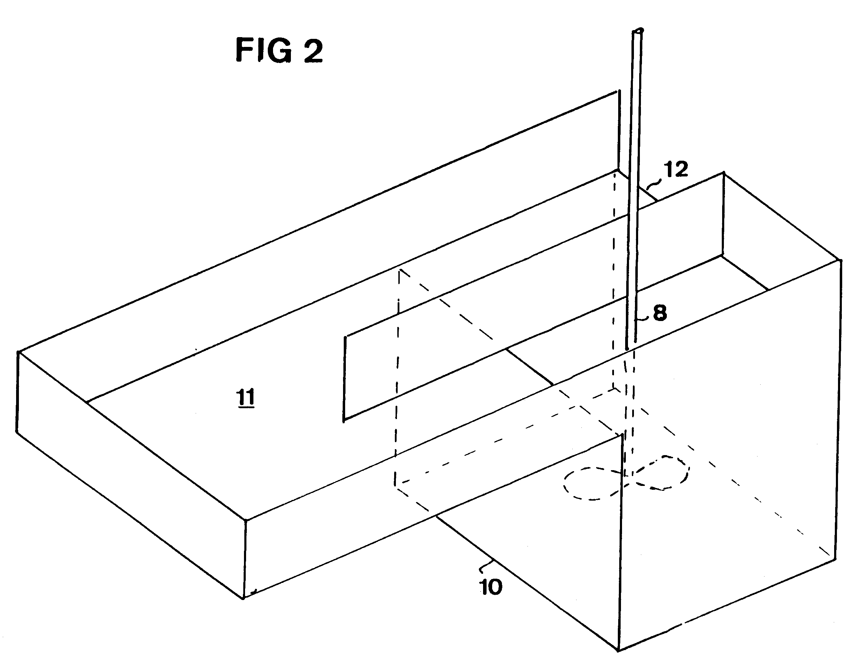

In FIG. 2 there is shown an insert device comprising a tube 10 having a square cross-section intended to be lowered into the basin 1, a spillway channel 11 with a discharge 12 to a precipitation basin in order to obtain an increased residence time of the sludge water before the precipitation step (so called intermediate precipitation) in which channel a static stirring is obtained. The device further comprises a stirrer 8 substantially centrally placed in the tube 10.

It has turned out that the stirrer 8 can have different form and effect. Thus it can be made in the form of a paddle stirrer or in the form of an ascending screw placed in a vertical, circular tube for vertical stirring, or can comprise a number of smaller screws placed on the same shaft or can comprise fixed devices for static formation of turbulence.

The static stirring in the spillway channel 11 can also be improved by arranging one or more helical means in the channel in order to force the water to a circulation during this passage.

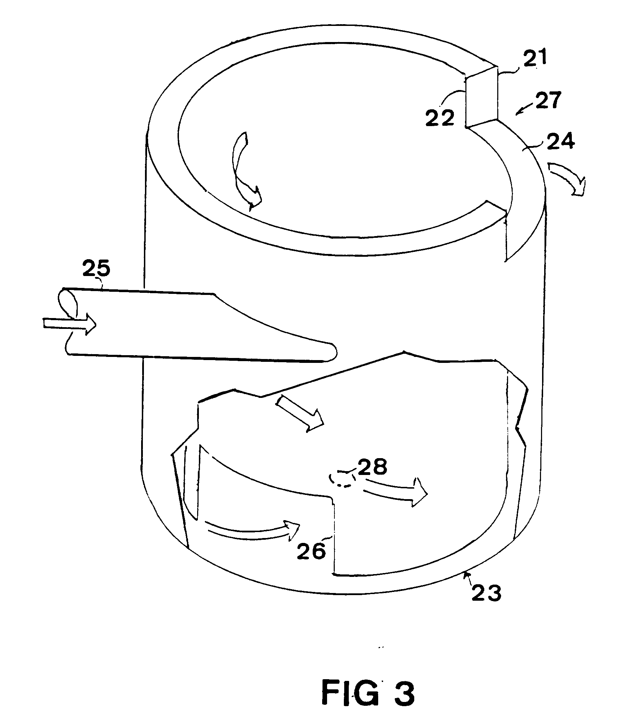

In FIG. 3 an embodiment of the present invention is shown which embodiment comprises two concentric cylinders 21 and 22 on a common bottom 23. The cylinders 21 and 22 are in principle open upwardly with the exception of a smaller part of the outer cylinder 21 which is closed with a cover 24. In the upper part of the outer cylinder 21 an inlet 25 is provided. In the inner cylinder 22 at its bottom 23 there is a second opening 26 arranged which opening has an area which is about 3 times as large as the area of the inlet opening of the inlet 25. Both cylinders 221 and 22 are partly cut down at their upper parts to the formation of an opening 27 which creates a spill-way over the cover 24. The height of this cut-down 27 is about half of the height of the second opening 26. The outlet opening 27 has a width that corresponds to the diameter of the inner cylinder 22. In the bottom 23 there is further provided centrally a smaller drainage 28 through which outlet 28 a smaller drainage of sludge assembled its in centre can be made.

The device functions in that way that sludge containing water is introduced through the inlet opening 25 and passes in the slot between the outer cylinder 21 and the inner cylinder 22 with a rotating movement downwardly as the opening of the inner cylinder 22 is arranged at the bottom 23. The water then flows into and upwardly in the inner cylinder 22 and is spilled into the opening 27 over the cover 24.

The device is hereby placed in such a way in a precipitation basin that the spillway/opening 27 is placed in the upper surface of the precipitation basin, whereby a flow out from the device is created and the flocs formed can then slowly fall to the bottom of the precipitation basin during a simultaneous further growth. As the water in the device obtains a rotating movement by the flow in the outer slot between the cylinders 21 and 22 the water will rotate in the inner cylinder as well, which means that more heavy sludge will be gathered on the bottom in the centre of the inner cylinder. Such sludge is withdrawn continuously through the opening 28 which has a diameter of 30 to 40 mm when the inner cylinder has a diameter of about 1800 mm and the outer cylinder 22 has a diameter of about 2400 mm. The inner cylinder 22 is, in a further preferred embodiment, conically downwardly so that the width of the slot between the cylinders increases downwardly in order to reduce the flowing rates and provide a possibility for an even better floc formation. The diameter of the inlet tube should also be equal to the width of the slot between the cylinders in the level with the inlet opening 25.

At a test using the present method and device in a waste water plant, whereby one has had the same percolation rate in parallel basins, utilizing the present method and device in one of the basins, it was obtained the following results. A denotes a result obtained using the present method and device introduced after the aeration basin in a biological step and B denotes those results obtained in the parallel basin using conventional running operation after the same aeration basin.

**TABLE**

| | Precipitation A | Precipitation B | Reduction % |
|---|---|---|---|
| COD mgO₂/l | 122 | 212 | 43 |
| Pₜₒₜ mgP/l | 1.68 | 3.53 | 52 |
| Susp mg/l | 35.9 | 122.6 | 71 |
| BOD₇ mgO₂/l | 40 | 128 | 69 |
| (3-days test) | | | |

As evident from the results above a marked improvement of the purification results are obtained. The results show the mean values over 12 days.

The reduction of suspended material has turned out to be independent of the use of a flocculating agent in the biological step or if the water is untreated without any addition of a flocculation and sludge improving agent .

## Claims

1. Device for carrying out a method at a biological purification step of waste water in aerated basins comprising static stirring in a non-aeration zone prior to a precipitation step, **characterized** in that it comprises two, substantially concentric cylinders (21,22) provided with a common bottom (23) and further provided with an inlet opening (25) in the outer cylinder (21) and arranged in the upper part of this cylinder (21), as well as an inlet opening (26) arranged in the inner cylinder (22) and arranged in the lower part of this cylinder (22), and that the cylinders (21,22) are provided with a spillway (27) and an outlet opening (28) arranged centrally in its bottom.

2. Device according to claim 1, **characterized** in that the inner cylinder (22) is conically tapering downwardly.

3. Device according to claim 1, **characterized** in that the slot between the outer (21) and the inner (22) cylinders has a width which corresponds to the diameter of the inlet opening (25).

4. Device according to claim 1, **characterized** in that the spillway (27) has a width corresponding to the diameter of the inner cylinder (22).

## Patentansprüche

1. Vorrichtung zur Durchführung eines Verfahrens mit einer Stufe biologischer Reinigung von Abwasser in belüfteten Becken unter statischem Rühren in einer Nichtbelüftungszone vor einer Ausfällungsstufe, **dadurch gekennzeichne**t, daß sie zwei im wesentlichen konzentrische Zylinder (21, 22) umfaßt, die mit einem gemeinsamen Boden (23) und weiterhin mit einer Einlaßöffnung (25) im äußeren Zylinder (21) im oberen Teil dieses Zylinders (21) angeordnet sowie mit einer im inneren Zylinder (22) im unteren Teil dieses Zylinders (22) angeordneten Einlaßöffnung (26) versehen sind, und daß die Zylinder (21, 22) mit einem Überlaufwehr (27) und einer mittig in ihrem Boden angeordneten Auslauföffnung (28) versehen sind.

2. Vorrichtung nach Anspruch 1, **dadurch gekennzeichnet**, daß der Innenzylinder (22) sich nach unten kegelförmig verjüngt.

3. Vorrichtung nach Anspruch 1, **dadurch gekennzeichnet**, daß der Schlitz zwischen dem äußeren (21) und dem inneren (22) Zylinder eine Breite hat, die dem Durchmesser der Einlaßöffnung (25) entspricht.

4. Vorrichtung nach Anspruch 1, **dadurch gekennzeichnet**, daß das Überlaufwehr (27) eine Breite entsprechend dem Durchmesser des Innenzylinders (22) hat.

## Revendications

1. Dispositif pour la mise en oeuvre d'un procédé constituant une phase de purification biologique d'une eau usée dans des bassins aérés, comprenant l'agitation statique dans une zone sans aération, avant une phase de précipitation, caractérisé en ce qu'il comprend deux cylindres essentiellement concentriques (21, 22) comportant un fond commun (23) et pourvus en outre d'une ouverture d'entrée (25) prévue dans le cylindre extérieur (21) et agencée dans la partie supérieure de ce cylindre (21), ainsi qu'une ouverture d'entrée (26) agencée dans le cylindre intérieur (22) et prévue dans la partie inférieure de ce cylindre (22), et en ce que les cylindres (21, 22) comportent un moyen d'évacuation (27) et une ouverture de sortie (28) agencée centralement dans leur fond.

2. Dispositif suivant la revendication 1, caractérisé en ce que le cylindre intérieur (22) est d'allure conique vers le bas.

3. Dispositif suivant la revendication 1, caractérisé en ce que l'espace compris entre le cylindre extérieur (21) et le cylindre intérieur (22) a une largeur qui correspond au diamètre de l'ouverture d'entrée (25).

4. Dispositif suivant la revendication 1, caractérisé en ce que le moyen d'évacuation (27) a une largeur correspondant au diamètre du cylindre intérieur (22).
